# EUROPÄISCHE PATENTANMELDUNG

(11) **EP 4 779 842 A1**
(43) Veröffentlichungstag der Anmeldung: **22.07.2026**
(21) Anmeldenummer: 26150788.3
(22) Anmeldetag: 08.01.2026
(51) Int. Cl.: H02J 7/68, B25F 5/02, F04B 1/00, H02J 7/70

(54) **ANTRIEBSEINHEIT MIT DURCH AKKUPACKS UNTERSCHIEDLICHER HERSTELLER BETREIBBAREM ELEKTROMOTOR**

(30) Priorität: 17.01.2025 DE 102025101733
(71) Anmelder: Lutz Pumpen GmbH, 97877 Wertheim (DE)
(72) Erfinder: Lutz, Karl-Heinz, 97892 Kreuzwertheim (DE); Nasu, Takumi, 97877 Wertheim (DE)
(74) Vertreter: Christ, Niko

(57) **Zusammenfassung**

Verschiedene Hersteller von akkubetriebenen Werkzeugen stellen jeweils eigene Akkupacks bereit, die sich in ihrer Formgebung, aber auch in ihren Anschlüssen, unterscheiden. Insbesondere sind bei bekannten Akkupacks die Gleichspannungsanschlüsse teilweise seitenvertauscht, wohingegen die bereitgestellte Spannung gleichartig ist. Die vorliegende Erfindung sieht vor, eine Antriebseinheit mit einer auswechselbaren Adaptereinheit auszurüsten, die für unterschiedliche Akkupacks verschiedener Hersteller geeignet ist. Dies gelingt durch ein verdrehbares Zwischenelement, das dafür sorgt, dass die Polarität des Akkupacks trotz dessen gleicher Ausrichtung bezüglich des Antriebs immer korrekt an den Elektromotor weitergegeben werden kann.

## Beschreibung

Die vorliegende Erfindung betrifft eine Antriebseinheit mit einem Antriebsgehäuse, in welchem ein Elektromotor, insbesondere zum Betrieb einer Behälterpumpe, aufgenommen ist, wobei dem Antriebsgehäuse eine Adaptereinheit zur lösbaren Aufnahme eines Akkupacks zugeordnet ist, die Adaptereinheit elektrisch leitende Kontaktelemente zur Kontaktierung von Gegenkontaktelementen des Akkupacks aufweist und die Kontaktelemente mit Versorgungsanschlüssen eines in dem Antriebsgehäuse aufgenommenen Elektromotors elektrisch verbunden sind.

Es ist bekannt, Antriebseinheiten für den Betrieb von Behälterpumpen mit Elektromotoren auszustatten, die dann über ein Stromkabel mit dem benötigten Strom versorgt werden. Allerdings ist es auch bereits seit längerem üblich geworden, die Elektromotoren mit Akkupacks zu versehen, so dass sie kabellos betrieben werden können. Zum Einen haben die Elektromotoren dann kein störendes Kabel, über das der Benutzer stolpern und das hinderlich sein kann, vor allem aber muss der Betriebsort dadurch nicht mehr in der Nähe einer Steckdose sein, mithin können Behälter an beliebigen Orten mithilfe batteriebetriebener Pumpen entleert werden.

In diesem Zusammenhang ist es bei vielen Werkzeugmaschinen üblich geworden, diese mit leicht austauschbaren Akkupacks zu betreiben, die in eine passende Adaptereinheit eingeschoben und verrastet werden und dort in eine Kontaktierung gebracht werden, welche die erforderlichen Kontakte des Akkupacks mit dem Elektromotor verbinden, zumindest einmal die beiden Pole der Gleichspannung. Aufgrund der Üblichkeit, solche Akkupacks für Werkzeugmaschinen bereitzustellen, stehen diese unterdessen von zahlreichen Herstellern bereit und halten vergleichbare Spannungen bereit, jedoch sind die Hersteller bestrebt, ihre Kunden dazu zu erziehen, nur Werkzeugmaschinen der eigenen Marke zu kaufen. Dies funktioniert, indem die eigenen Akkupacks äußere Formen und Anschlüsse bereithalten, die nicht mit den Adaptereinheiten anderer Herstellern zusammenwirken, sei es weil die Rastmechanismen in ihrer Form nicht kompatibel sind, weil die Größe und Form der Akkupacks abweicht oder weil die Anschlüsse vertauscht sind, mithin der Pluspol einmal links und einmal rechts ist.

Aus dem Stand der Technik sind in diesem Zusammenhang die DE 11 2013 006 567 T5, die DE 41 00 463 A1 und die DE 10 2021 104 825 A1 vorbekannt.

Vor diesem Hintergrund liegt der vorliegenden Erfindung die Aufgabe zugrunde, eine Antriebseinheit zu schaffen, welche einen Elektromotor aufweist und dieser mithilfe von Akkupacks unterschiedlicher Hersteller durch den einfachen Austausch einer Adaptereinheit betreibbar ist.

Gelöst wird diese Aufgabe durch eine Antriebseinheit gemäß den Merkmalen des unabhängigen Anspruchs 1. Sinnvolle Ausgestaltungen einer solchen Antriebseinheit können den sich anschließenden abhängigen Ansprüchen entnommen werden.

Vorgesehen ist insoweit eine Antriebseinheit mit einem Antriebsgehäuse, in welchem ein Elektromotor, insbesondere zum Betrieb einer Behälterpumpe, aufgenommen ist, wobei dem Antriebsgehäuse eine Adaptereinheit zur lösbaren Aufnahme eines Akkupacks zugeordnet ist, die Adaptereinheit elektrisch leitende Kontaktelemente zur Kontaktierung von Gegenkontaktelementen des Akkupacks aufweist und die Kontaktelemente mit Versorgungsanschlüssen eines in dem Antriebsgehäuse aufgenommenen Elektromotors elektrisch verbunden sind. Diese ist erfindungsgemäß dadurch gekennzeichnet, dass die Adaptereinheit mit dem Antriebsgehäuse lösbar und unter Zwischenlage eines Zwischenelements verbunden ist und mit den Kontaktelementen elektrisch verbundene Kontaktstempel zur jeweiligen Kontaktierung voneinander isolierter und über Drahtleitungen mit den Versorgungsanschlüssen des Elektromotors verbundener Kontaktflächen des Zwischenelements aufweist, wobei das Zwischenelement in einer ersten Position und einer um 180° verdrehten zweiten Position zwischen der Adaptereinheit und dem Antriebsgehäuse derart aufnehmbar ist, dass bei einem Wechsel von der ersten Position in die zweite Position eine Zuordnung der Kontaktstempel zu den Kontaktflächen wechselt.

In diesem Zusammenhang ist festzuhalten, dass die Adaptereinheit passend zu jedem beliebigen Hersteller eines Akkupacks gewählt werden kann. Mit anderen Worten kann für einen ersten Hersteller eine erste Adaptereinheit genutzt werden, die auf dessen Akkupacks eingerichtet ist, soll aber die Antriebseinheit für die Akkupacks eines anderen Herstellers hergerichtet werden, so wird die Adaptereinheit ausgetauscht, so dass die Akkupacks des anderen Herstellers über diese Adaptereinheit mit dem Elektromotor verbunden werden können. Die Auswahl der passenden Adaptereinheit sorgt dafür, dass der Verrastungsmechanismus und auch die allgemeine Formgebung zu dem gewünschten Ackupack passt. Die Polarität kann hierdurch aber nicht notwendigerweise fehlerfrei vorgegeben werden.

Hierzu sieht die Erfindung vor, dass das Zwischenelement mit der Adaptereinheit in elektrisch leitenden Kontakt gebracht wird, so dass die Kontaktelemente der Adaptereinheit über Kontaktstempel auf Kontaktflächen des Zwischenelements drücken und so eine Kontaktierung herstellen. Das Zwischenelement kann insbesondere platten- oder scheibenförmig sein und sieht vor, dass seine Kontaktflächen mit den Versorgungsanschlüssen des Elektromotors verbunden sind. Die Kontaktfllächen des Zwischenelements können beispielsweise mit der Polarisierung beschriftet sein, so dass es lediglich erforderlich ist, das Zwischenelement so zu verdrehen, dass die Polaritäten des Zwischenelements mit der entsprechenden Beschriftung der Adaptereinheit übereinstimmt. Eine falsche Verbindung von Akkupack und Elektromotor kann auf diese Weise auch bei wechselnden Akkupacks unterschiedlicher Hersteller vermieden werden.

In einer ersten Ausgestaltung kann vorgesehen sein, dass die Kontaktflächen des Zwischenelements als Blecheinlagen ausgebildet sind, welche auf dem Zwischenelement aufgelegt sind und endständige, abgewinkelte Steckelemente ausbilden, die durch Durchlässe des Zwischenelements hindurchgeführt und jenseits der Durchlässe mit den Drahtleitungen verbunden sind. Hierdurch ist eine einfache Kontaktierung zwischen den Kontaktstempeln der Adaptereinheit und diesen Kontaktflächen ermöglicht. Das Zwischenelement schließt das Innere des Antriebsgehäuses nach oben hin ab und stellt ein Interface für die Adaptereinheit dar. Da lediglich ein Einstecken der gebogenen Blecheinlagen in ein ansonsten vorgefertigtes Kunststoffteil erfolgen muss, ist die Herstellung des Zwischenelements auf diese Weise kostengünstig und einfach zu bewerkstelligen. Die Steckelemente auf der zum Elektromotor hin weisenden Seite können leicht mit Anschlussdrähten verbunden werden, insbesondere wenn herkömmliche Formen von Kabelverbindungen benutzt werden.

In einer weiteren Ausgestaltung kann vorgesehen sein, dass die Kontaktflächen in Vertiefungen des Zwischenelements aufgenommen sind, so dass Oberflächen von Kontaktflächen und Zwischenelement flächenbündig ineinander übergehen. Gerade wenn die Kontaktstempel bei einem Aufsetzen der Adaptereinheit auf die Oberseite des Antriebsgehäuses über die Zwischenplatte schleifen, können sie auf diese Weise nicht an den Kanten der Kontaktflächen hängenbleiben.

Bevorzugtermaßen kann weiter vorgesehen sein, die Adaptereinheit oder das Zwischenelement Erhöhungselemente und das jeweilige Gegenstück Ausnehmungen aufweist, wobei nur in einer Position, in welcher die Erhöhungselemente in die Ausnehmungen eingreifen, eine Kontaktierung zwischen Kontaktstempeln und Kontaktflächen stattfindet und die Erhöhungselemente und die Ausnehmungen so positioniert sind, dass eine von der Adaptereinheit vorgegebene Polarität des Akkupacks korrekt von dem Zwischenelement an die Versorgungsanschlüsse des Elektromotors übertragen wird. Bei der Annäherung der Adaptereinheit an das Zwischenelement werden die Erhöhungselemente auf die Fläche des jeweiligen Gegenstücks stoßen, also wenn die Erhöhungselemente auf dem Zwischenelement angeordnet sind, auf die Fläche der Adaptereinheit, und wenn sie auf der Adaptereinheit angeordnet sind, auf der Fläche des Zwischenelements. Nur wenn die Erhöhungen und die Ausnehmungen, die als Kavitäten oder als Durchbohrungen oder als Aussparungen, Einkerbungen und dergleichen ausgestaltet sein können, zusammenwirken, ist eine funktionierende Verbindung zwischen der Adaptereinheit und dem Zwischenelement gegeben. Die Erhöhungen sind so angeordnet, dass die Polarität des mit der gewählten Adaptereinheit zusammenwirkenden Akkupacks nur dann mit der durch die Versorgungsanschlüsse des Elektromotors vorgegebenen Polarität übereinstimmt, wenn das Zwischenelement in der richtigen, ersten oder zweiten, Position in seiner Aufnahme eingelegt ist. Es muss das Zwischenelement also abhängig von der gewählten Adaptereinheit in der ersten oder in der zweiten Position angeordnet sein, damit der mechanische Zusammenbau der Adaptereinheit mit dem Antriebsgehäuse gelingen kann.

Die Verwendung von Erhöhungselementen und Ausnehmungen ist aber nicht die einzige Möglichkeit. Mit einigem Vorteil kann alternativ auch vorgesehen sein, dass die Adaptereinheit erste Erhöhungselemente und das Zwischenelement zweite Erhöhungselemente aufweisen, wobei die ersten Erhöhungselemente mit korrespondierenden zweiten Erhöhungselementen zusammenwirken, wobei nur in einer Position, in welcher die ersten Erhöhungselemente neben den zweiten Erhöhungselementen liegen, eine Kontaktierung zwischen Kontaktstempeln und Kontaktflächen stattfindet und die ersten Erhöhungselemente und die zweiten Erhöhungselemente so positioniert sind, dass eine von der Adaptereinheit vorgegebene Polarität des Akkupacks korrekt von dem Zwischenelement an die Versorgungsanschlüsse des Elektromotors übertragen wird. Hier treffen, sofern die Position des Zwischenelements falsch gewählt ist, Erhöhungselemente aufeinander, so dass auch hier der Zusammenbau nicht möglich ist, wenn keine korrekte Zuordnung von Position des Zwischenelements zu der gewählten Adaptereinheit besteht.

Bevorzugtermaßen kann es vorgesehen sein, dass das Antriebsgehäuse einen rohrförmigen Anschlussbereich zur Verbindung mit der Adaptereinheit aufweist, wobei der rohrförmige Anschlussbereich über ein Schraubgewinde mit der Adaptereinheit zusammenwirkt. In einem solchen Fall ist sichergestellt, dass die Adaptereinheit gerade über dem Antriebsgehäuse angesetzt wird und sich beim Festdrehen flächenparallel annähert.

Hinsichtlich der Lagerung des Zwischenelements sind im Wesentlichen zwei Möglichkeiten vorgesehen, wie sich das Zwischenelement verhält. Zunächst kann vorgesehen sein, dass das Antriebsgehäuse eine Aufnahme für das Zwischenelement aufweist, wobei das Zwischenelement in der Aufnahme drehfest gelagert ist. Bei einer drehfesten Lagerung muss dessen Position, also erste oder zweite Position, vorab gewählt werden. Das Zwischenelement kann in seiner Formgebung Kennzeichen aufweisen, wie etwa Abflachungen oder Einkerbungen, die in entsprechende Gegenformen der Aufnahme eingreifen und die Drehung des Zwischenelements verhindern.

Alternativ kann vorgesehen sein, dass das Antriebsgehäuse eine kreisrunde Aufnahme für das Zwischenelement aufweist und das Zwischenelement in der Aufnahme drehfrei gelagert ist. In diesem Fall ist es sinnvoll, wenn die Adaptereinheit im Zuge einer Drehung, etwa beim Festdrehen, das Zwischenelement mitnimmt und seine Position durch die Mitnahme so vorgibt, dass auch hier ein Fehler bei dem Zusammenbau nicht auftreten kann, da die für die Mitnahme vorgesehenen Erhöhungselemente so zusammenwirken, dass eine Mitnahme so weit erfolgen kann, dass die Polarität zu dem verwendeten Akkupack passend ist.

Konkret kann hierfür vorgesehen sein, dass die Adaptereinheit erste Erhöhungen und das Zwischenelement zweite Erhöhungen aufweist, wobei die ersten Erhöhungen mit den zweiten Erhöhungen über seitliche Flanken zusammenwirken. Durch ein gegenseitiges Verdrehen wirken die Flanken aufeinander ein und das drehende Teil nimmt das stehende Teil mit, sobald die Flanken aufeinandertreffen. Hierbei ist die Position der Flanken und der Erhöhungselemente so gewählt, dass im Moment des Aufeinandertreffens der Flanken auf die Kontaktstempel in korrekter Polarität auf den Kontaktflächen liegen.

Um eine Fixierung der Adaptereinheit auf dem Antriebsgehäuse zu ermöglichen, kann vorgesehen sein, dass das Antriebsgehäuse Schraubaufnahmen aufweist, welche mit Schraubdurchlässen des Zwischenelements und der Adaptereinheit in einer Betriebsposition der Adaptereinheit korrespondieren. Da die Schrauben letztlich zumindest teilweise durch die Adaptereinheit und das Zwischenelement hindurch in das Antriebsgehäuse eingedreht werden, erfolgt eine gegenseitige Fixierung in der erreichten Position, so dass diese nicht mehr ohne ein Lösen der Verschraubung verlassen werden kann.

Schließlich kann vorgesehen sein, dass die Kontaktstempel der Adaptereinheit gegen die Kontaktflächen des Zwischenelements über Druckfedern federnd gelagert sind. Auch bei geringen Ungenauigkeiten kann dadurch ein festes Anpressen der Kontaktstempel gegen die Kontaktflächen sichergestellt werden, so dass die Funktion des Antriebs durch die sichere Kontaktierung stets gegeben ist.

Die vorstehend beschriebene Erfindung wird im Folgenden anhand eines Ausführungsbeispiels näher erläutert.

Es zeigen
- Figur 1: eine Antriebseinheit mit einer Adaptereinheit und einem Zwischenelement, sowie einem Akkupack in einer perspektivischen Explosionsdarstellung,
- Figur 2: das Zwischenelement in zwei Darstellungen in Draufsicht von oben und unten,
- Figur 3: die Adaptereinheit in zwei Darstellungen in Draufsicht von oben und unten,
- Figur 4: die auf das Zwischenelement aufgesetzte Adaptereinheit in einer frontalen Querschnittsdarstellung, sowie
- Figur 5: die Antriebseinheit mit einer Adaptereinheit und einem Zwischenelement, sowie einem Akkupack in perspektivischen Explosionsdarstellungen in verschiedenen Positionen des Zwischenelements.

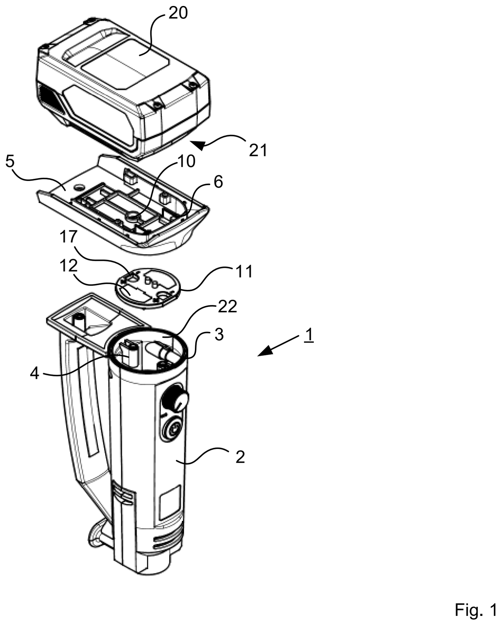

Figur 1 zeigt eine Explosionsdarstellung einer Antriebseinheit 1, die verschiedene Komponenten und deren Anordnung veranschaulicht. Die Antriebseinheit 1 umfasst ein Antriebsgehäuse 2, eine Adaptereinheit 5, ein Zwischenelement 11 und kann mit einem ebenfalls gezeichneten Akkupack 20 versehen werden.

Das Antriebsgehäuse 2 ist mit einem rohrförmigen Anschlussbereich 3 ausgestattet, der zur Verbindung mit der Adaptereinheit 5 dient. Der rohrförmige Anschlussbereich 3 weist ein Schraubgewinde auf, das mit der Adaptereinheit 5 zusammenwirkt, um eine sichere mechanische Verbindung zu gewährleisten. Das Antriebsgehäuse 2 enthält zudem Schraubaufnahmen 4, die mit Schraubdurchlässen 10 der Adaptereinheit 5 und Schraubdurchlässen 17 des Zwischenelements 11 korrespondieren, um eine stabile Befestigung in der Betriebsposition zu ermöglichen.

Die Adaptereinheit 5 ist zur lösbaren Aufnahme des Akkupacks 20 vorgesehen und enthält elektrisch leitende Kontaktelemente 6, die zur Kontaktierung von Gegenkontaktelementen 21 des Akkupacks 20 dienen. Für eine solche Kontaktierung wird der Akkupack 20 üblicherweise über eine offene Stirnseite der Adaptereinheit 5, hier hinten im Bild, in die Adaptereinheit 5 eingeschoben und verrastet. In der Verrastungsposition greifen die hier nicht sichtbaren Gegenkontaktelemente 21, bei denen es sich etwa um Paare aufeinanderdrückender Federelemente handeln kann, in die Kontaktelemente ein, welche dann die Federelemente auseinanderdrücken und dadurch elektrisch kontaktieren. Die Kontaktelemente 6 sind mit Kontaktstempeln 7 an der Unterseite der Adaptereinheit 5 verbunden, die zur Kontaktierung der Kontaktflächen 12 des Zwischenelements 11 verwendet werden. Die Kontaktstempel 7 sind federnd über Druckfedern 8 gelagert, um eine zuverlässige elektrische Verbindung zu gewährleisten.

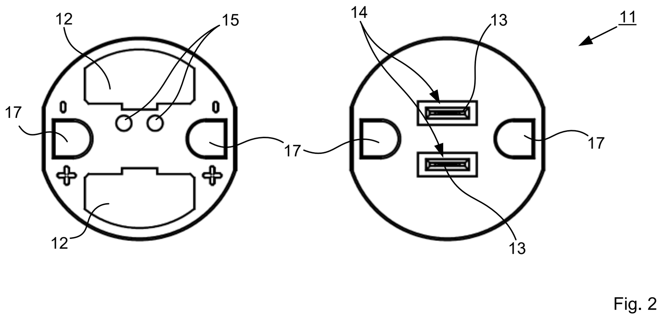

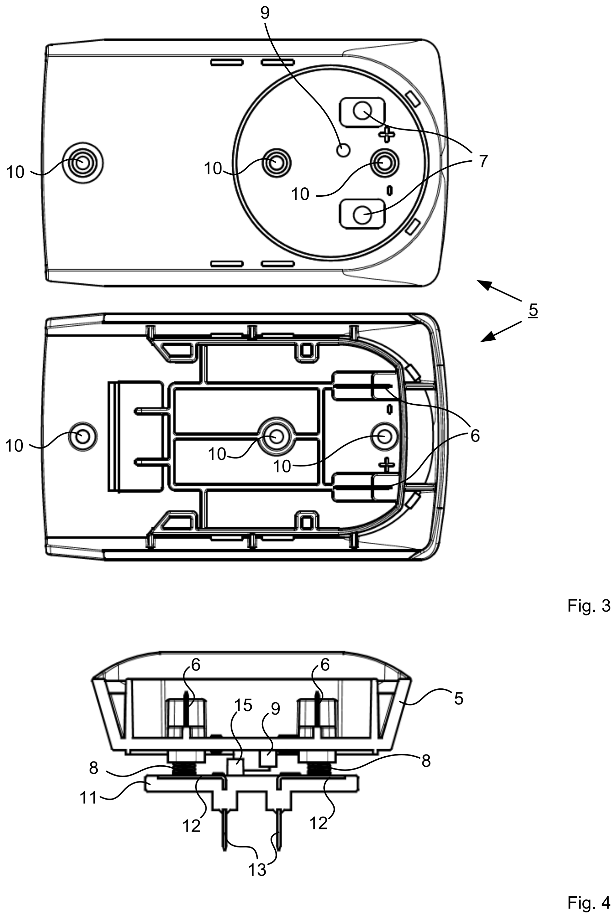

Das Zwischenelement 11 ist zwischen der Adaptereinheit 5 und dem Antriebsgehäuse 2 angeordnet und kann in einer Aufnahme 22 in einer ersten Position und einer um 180° verdrehten zweiten Position aufgenommen werden. Das Zwischenelement 11 weist Kontaktflächen 12 auf, die als Blecheinlagen ausgebildet sind und endständige, abgewinkelte Steckelemente 13 ausbilden, die in Figuren 2 und 4 zu erkennen sind. Diese Steckelemente 13 werden durch Durchlässe 14 des Zwischenelements 11 hindurchgeführt und jenseits der Durchlässe 14 mit Drahtleitungen verbunden, die zu den Versorgungsanschlüssen des Elektromotors führen. Die Kontaktflächen 12 sind in Vertiefungen des Zwischenelements 11 aufgenommen, sodass die Oberflächen von Kontaktflächen 12 und Zwischenelement 11 flächenbündig ineinander übergehen.

Das Zwischenelement 11 ist in der Aufnahme 22 im Anschlussbereich 3 des Antriebsgehäuses 2 drehfest gelagert, was eine stabile Positionierung und eine zuverlässige elektrische Verbindung sicherstellt. Wird eine andere Adaptereinheit 5 verwendet, die für ein anderes Akkupack 20 hergerichtet ist, so kann es erforderlich sein, die Polarität gegenüber dem Elektromotor zu wechseln. Dazu kann das Zwischenelement in der Aufnahme 22 gedreht und andersherum eingesetzt werden, während die Verdrahtung mit den Versorgungsanschlüssen des Elektromotors erhalten bleibt. Dies erlaubt es, unterschiedliche Akkupacks verschiedener Hersteller mit derselben Antriebseinheit zu benutzen, indem lediglich eine andere Adaptereinheit 5 an dem Antriebsgehäuse 2 angebracht wird.

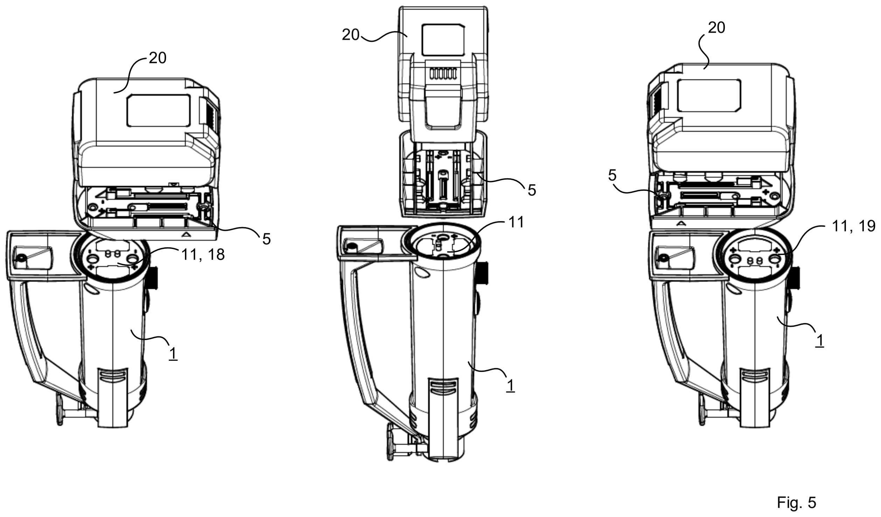

Figur 2 zeigt eine detaillierte Darstellung des Zwischenelements 11, das in der Antriebseinheit 1 gemäß Figur 1 verwendet wird. Das Zwischenelement 11 ist in zwei Ansichten dargestellt, wobei die linke Ansicht eine der Adaptereinheit 5 zugewandte Oberseite und die rechte Ansicht eine dem Elektromotor zugewandte Rückseite des Zwischenelements 11 zeigt. In der oberen Draufsicht sind die Kontaktflächen 12 deutlich sichtbar, die als Blecheinlagen ausgebildet sind. Diese Kontaktflächen 12 sind auf dem Zwischenelement 11 aufgelegt und enden in abgewinkelten Steckelementen 13, die durch Durchlässe 14 des Zwischenelements 11 hindurchgeführt sind. Die Kontaktflächen 12 sind in Vertiefungen des Zwischenelements 11 aufgenommen, sodass die Oberflächen der Kontaktflächen 12 und des Zwischenelements 11 flächenbündig ineinander übergehen. Dies gewährleistet eine gleichmäßige und zuverlässige Kontaktierung mit den Kontaktstempeln 7 der Adaptereinheit 5, auch bei einer Verdrehung. Die zweiten Erhöhungselemente 15 sind in der Beschreibung zu Figuren 4 und 5 näher erläutert. Sie dienen dazu, die korrekte Positionierung des Zwischenelements 11 zwischen der Adaptereinheit 5 und dem Antriebsgehäuse 2 sicherzustellen.

Die untere Ansicht des Zwischenelements 11 zeigt die abgewinkelten Steckelemente 13, die durch die Durchlässe 14 hindurchgeführt sind. Diese Steckelemente 13 sind jenseits der Durchlässe 14 mit Drahtleitungen verbunden, welche die elektrische Verbindung zu den Versorgungsanschlüssen des Elektromotors herstellen.

Die Schraubdurchlässe 17 sind sowohl in der Vorder- als auch in der Rückansicht des Zwischenelements 11 sichtbar. Diese Durchlässe 17 korrespondieren mit den Schraubaufnahmen 4 des Antriebsgehäuses 2 und ermöglichen eine feste und sichere Befestigung des Zwischenelements 11 in der Aufnahme 22 des Antriebsgehäuses 2. Die korrekte Positionierung und Befestigung des Zwischenelements 11 ist entscheidend für die zuverlässige elektrische Verbindung und den sicheren Betrieb der Antriebseinheit.

Figur 3 zeigt die Adaptereinheit 5 gemäß Figur 1, die zur lösbaren Aufnahme eines Akkupacks 20 vorgesehen ist, in einer Ansicht zunächst von unten, dem Zwischenelement zugewandt, und sodann einer Ansicht von oben, dem Akkupack 20 zugewandt. Die Adaptereinheit 5 ist mit elektrisch leitenden Kontaktelementen 6 ausgestattet, die zur Kontaktierung von Gegenkontaktelementen des Akkupacks 20 dienen. Sie sind auf der Gegenseite mit Kontaktstempeln 7 verbunden, die letztlich über das Zwischenelement 11 eine Kontaktierung mit Versorgungsanschlüssen eines Elektromotors herstellen, der in dem Antriebsgehäuse 2 aufgenommen ist. Die Adaptereinheit 5 weist mehrere Schraubdurchlässe 10 auf, die zur Befestigung an einem Antriebsgehäuse oder einem Zwischenelement dienen können.

Figur 4 veranschaulicht die Adaptereinheit 5 und das darunterliegende Zwischenelement in einer Seitenansicht, welche die Anordnung der Kontaktelemente 6 und deren Verbindung zu den Kontaktstempeln 7 zeigt. Die Kontaktstempel 7 sind federnd gegen die Kontaktflächen 12 des Zwischenelements 11 gelagert, wobei Druckfedern 8 zur Federung der Kontaktstempel 7 verwendet werden. Die Kontaktflächen 12 des Zwischenelements 11 sind als Blecheinlagen ausgebildet, die in Vertiefungen auf dem Zwischenelement 11 aufgelegt sind. Diese Blecheinlagen bilden endständige, abgewinkelte Steckelemente 13 aus, die durch Durchlässe 14 des Zwischenelements 11 hindurchgeführt und jenseits der Durchlässe 14 mit Drahtleitungen verbunden sind.

Die Adaptereinheit 5 ist mit ersten Erhöhungselementen 9 ausgestattet, die mit korrespondierenden zweiten Erhöhungselementen 15 des Zwischenelements 11 zusammenwirken. Diese Erhöhungselemente 9 und 15 sind so positioniert, dass nur in einer bestimmten Position eine Kontaktierung zwischen den Kontaktstempeln 7 und den Kontaktflächen 12 stattfindet. Dies gewährleistet, dass die von der Adaptereinheit 5 vorgegebene Polarität des Akkupacks 20 korrekt an die Versorgungsanschlüsse des Elektromotors übertragen wird.

Das Zwischenelement 11 kann in einer ersten Position und einer um 180° verdrehten zweiten Position zwischen der Adaptereinheit 5 und dem Antriebsgehäuse aufgenommen werden. Bei einem Wechsel von der ersten in die zweite Position wechselt die Zuordnung der Kontaktstempel 7 zu den Kontaktflächen 12, was eine flexible Anpassung der elektrischen Verbindung ermöglicht. Dies ist aber nur dann möglich, wenn auch gleichzeitig eine Adaptereinheit 5 verwendet wird, welche das erste Erhöhungselement 9 auf der anderen Seite hat, da bei einer Verdrehung des Zwischenelements 11 dessen zweite Erhöhungselemente 15 mit den ersten Erhöhungselementen 9 der vorliegenden Adaptereinheit 5 kollidieren würden und ein Zusammenbau dann nicht möglich wäre. Dies ist auch gewünscht, da das Akkupack 20 zur Verwendung mit der vorliegenden Adaptereinheit 5 die gezeigte und keine umgekehrte Polarität besitzt.

Die Adaptereinheit 5 und das Zwischenelement 11 sind folglich so gestaltet, dass sie eine sichere und zuverlässige elektrische Verbindung zwischen einem Akkupack und einem Elektromotor gewährleisten, wobei gleichzeitig eine einfache Montage und Demontage ermöglicht wird. Die Verwendung von Druckfedern 8 zur Lagerung der Kontaktstempel 7 sorgt für eine gleichmäßige Kontaktkraft und damit für eine stabile elektrische Verbindung.

Figur 5 zeigt eine Antriebseinheit in einer Darstellung gemäß Figur 5 mit einem Akkupack, wobei von einer zur nächsten Darstellung das Zwischenelement 11, die Adaptereinheit 5 und das Akkupack 20 in unterschiedlichen Positionen gezeigt sind, wobei hier im Gegensatz zu den vorherigen Figuren das Zwischenelement 11 in seiner Aufnahme 22 drehfrei gelagert ist.

Auf der linken Seite beginnt der Bewegungsablauf. Die Adaptereinheit 5 wird auf das Zwischenelement 11 aufgesetzt und anschließend nach links gedreht. Die Darstellung ist so gewählt, dass die Abstände der Komponenten bestehen bleibt, was aber nur der Übersicht dienen soll. Es soll selbstverständlich ein gegenseitiges Eingreifen der Komponenten, insbesondere der jeweiligen Erhöhungselemente 9 und 15 erfolgen.

Nach dem Aufsetzen der Adaptereinheit 5 auf das Zwischenelement 11 beginnt die Drehung, wobei die ersten Erhöhungselemente 9 mit ihren Flanken bereits schnell mit den Flanken der zweiten Erhöhungselemente 15 des Zwischenelements 11 zusammenstoßen und das Zwischenelement 11 dadurch in der Drehung mitnehmen. Wenn die Adaptereinheit 5 in der ganz rechts dargestellten Position ankommt, wird lediglich noch eine Schraubbefestigung vorgesehen, welche die Adaptereinheit 5 auf dem Antriebsgehäuse 2 der Antriebseinheit 1 fixiert. Das Mitdrehen des Zwischenelements 11 sorgt dafür, dass die Weiterleitung der Spannung von den Kontaktelementen 6 der Adaptereinheit 5 stets zur Polarität des Elektromotors passt.

Vorstehend beschrieben ist somit eine Antriebseinheit, welche einen Elektromotor aufweist und dieser mithilfe von Akkupacks unterschiedlicher Hersteller durch den einfachen Austausch einer Adaptereinheit betreibbar ist.

### BEZUGSZEICHENLISTE

- 1: Antriebseinheit
- 2: Antriebsgehäuse
- 3: Anschlussbereich
- 4: Schraubaufnahme
- 5: Adaptereinheit
- 6: Kontaktelement
- 7: Kontaktstempel
- 8: Druckfeder
- 9: erstes Erhöhungselement
- 10: Schraubdurchlass
- 11: Zwischenelement
- 12: Kontaktfläche
- 13: Steckelement
- 14: Durchlass
- 15: zweites Erhöhungselement
- 17: Schraubdurchlass
- 18: erste Position
- 19: zweite Position
- 20: Akkupack
- 21: Gegenkontaktelement
- 22: Aufnahme

## Patentansprüche

1. Antriebseinheit mit einem Antriebsgehäuse (2), in welchem ein Elektromotor, insbesondere zum Betrieb einer Behälterpumpe, aufgenommen ist, wobei dem Antriebsgehäuse (2) eine Adaptereinheit (5) zur lösbaren Aufnahme eines Akkupacks (20) zugeordnet ist, die Adaptereinheit (5) elektrisch leitende Kontaktelemente (6) zur Kontaktierung von Gegenkontaktelementen (21) des Akkupacks (20) aufweist und die Kontaktelemente (6) mit Versorgungsanschlüssen eines in dem Antriebsgehäuse (2) aufgenommenen Elektromotors elektrisch verbunden sind,
**dadurch gekennzeichnet, dass** die Adaptereinheit (5) mit dem Antriebsgehäuse (2) lösbar und unter Zwischenlage eines Zwischenelements (11) verbunden ist und mit den Kontaktelementen (6) elektrisch verbundene Kontaktstempel (7) zur jeweiligen Kontaktierung voneinander isolierter und über Drahtleitungen mit den Versorgungsanschlüssen des Elektromotors verbundener Kontaktflächen (12) des Zwischenelements (11) aufweist, wobei das Zwischenelement (11) in einer ersten Position (18) und einer um 180° verdrehten zweiten Position (19) zwischen der Adaptereinheit (5) und dem Antriebsgehäuse (2) derart aufnehmbar ist, dass ein bestimmter Kontaktstempel (7) in der ersten Position (18) eine erste der Kontaktflächen (12) kontaktiert, während derselbe Kontaktstempel (7) in der zweiten Position (19) eine zweite, von der ersten Kontaktfläche (12) verschiedene Kontaktfläche (12) kontaktiert, wodurch die Polarität der an den Elektromotor weitergeleiteten Spannung umgekehrt wird.

2. Antriebseinheit gemäß Anspruch 1, **dadurch gekennzeichnet, dass** die Kontaktflächen (12) des Zwischenelements (11) als Blecheinlagen ausgebildet sind, welche auf dem Zwischenelement (11) aufgelegt sind und endständige, abgewinkelte Steckelemente (13) ausbilden, die durch Durchlässe (14) des Zwischenelements (11) hindurchgeführt und jenseits der Durchlässe (14) mit den Drahtleitungen verbunden sind.

3. Antriebseinheit gemäß Anspruch 2, **dadurch gekennzeichnet, dass** die Kontaktflächen (12) in Vertiefungen des Zwischenelements (11) aufgenommen sind, so dass Oberflächen von Kontaktflächen (12) und Zwischenelement (11) flächenbündig ineinander übergehen.

4. Antriebseinheit gemäß einem der vorhergehenden Ansprüche, **dadurch gekennzeichnet, dass** die Adaptereinheit (5) oder das Zwischenelement (11) Erhöhungselemente und das jeweilige Gegenstück Ausnehmungen aufweist, wobei nur in einer Position, in welcher die Erhöhungselemente in die Ausnehmungen eingreifen, eine Kontaktierung zwischen Kontaktstempeln (7) und Kontaktflächen (12) stattfindet und die Erhöhungselemente und die Ausnehmungen so positioniert sind, dass eine von der Adaptereinheit (5) vorgegebene Polarität des Akkupacks (20) korrekt von dem Zwischenelement (11) an die Versorgungsanschlüsse des Elektromotors übertragen wird.

5. Antriebseinheit gemäß einem der Ansprüche 1 bis 3, **dadurch gekennzeichnet, dass** die Adaptereinheit (5) erste Erhöhungselemente (9) und das Zwischenelement (11) zweite Erhöhungselemente (15) aufweisen, wobei die ersten Erhöhungselemente (9) mit korrespondierenden zweiten Erhöhungselementen (15) zusammenwirken, wobei nur in einer Position, in welcher die ersten Erhöhungselemente (9) neben den zweiten Erhöhungselementen (15) liegen, eine Kontaktierung zwischen Kontaktstempeln (7) und Kontaktflächen (12) stattfindet und die ersten Erhöhungselemente (9) und die zweiten Erhöhungselemente (15) so positioniert sind, dass eine von der Adaptereinheit (5) vorgegebene Polarität des Akkupacks (20) korrekt von dem Zwischenelement (11) an die Versorgungsanschlüsse des Elektromotors übertragen wird.

6. Antriebseinheit gemäß einem der vorhergehenden Ansprüche, **dadurch gekennzeichnet, dass** das Antriebsgehäuse (2) einen rohrförmigen Anschlussbereich (3) zur Verbindung mit der Adaptereinheit (5) aufweist, wobei der rohrförmige Anschlussbereich (3) über ein Schraubgewinde mit der Adaptereinheit (5) zusammenwirkt.

7. Antriebseinheit gemäß einem der vorhergehenden Ansprüche, **dadurch gekennzeichnet, dass** das Antriebsgehäuse (2) eine Aufnahme (22) für das Zwischenelement (11) aufweist, wobei das Zwischenelement (11) in der Aufnahme (22) drehfest gelagert ist.

8. Antriebseinheit gemäß einem der Ansprüche 1 bis 6, **dadurch gekennzeichnet, dass** das Antriebsgehäuse (2) eine kreisrunde Aufnahme (22) für das Zwischenelement (11) aufweist und das Zwischenelement (11) in der Aufnahme (22) drehfrei gelagert ist.

9. Antriebseinheit gemäß einem der vorhergehenden Ansprüche, **dadurch gekennzeichnet, dass** die Adaptereinheit (5) erste Erhöhungen (9) und das Zwischenelement (11) zweite Erhöhungen (15) aufweist, wobei die ersten Erhöhungen (9) mit den zweiten Erhöhungen (15) über seitliche Flanken zusammenwirken.

10. Antriebseinheit gemäß einem der vorhergehenden Ansprüche, **dadurch gekennzeichnet, dass** das Antriebsgehäuse (2) Schraubaufnahmen (4) aufweist, welche mit Schraubdurchlässen (10, 17) des Zwischenelements (11) und der Adaptereinheit (5) in einer Betriebsposition der Adaptereinheit (5) korrespondieren.

11. Antriebseinheit gemäß einem der vorhergehenden Ansprüche, **dadurch gekennzeichnet, dass** die Kontaktstempel (7) der Adaptereinheit (5) gegen die Kontaktflächen (12) des Zwischenelements (11) über Druckfedern (8) federnd gelagert sind.
